# EUROPÄISCHE PATENTSCHRIFT

(11) **EP 4 140 690 B1**
(45) Veröffentlichungstag und Bekanntmachung des Hinweises auf die Patenterteilung: **20.03.2024**
(21) Anmeldenummer: 22191520.0
(22) Anmeldetag: 22.08.2022
(51) Int. Cl.: B29C 45/14

(54) **WERKZEUGHÄLFTE UND VERFAHREN ZUM HERSTELLEN EINES SPRITZGUSSTEILS MIT WENIGSTENS EINEM EINLEGETEIL**
TOOL HALF AND METHOD FOR MANUFACTURING AN INJECTION MOULDED PART WITH AT LEAST ONE INSERT
MOITIÉ D'OUTIL ET PROCÉDÉ DE FABRICATION D'UNE PIÈCE MOULÉE PAR INJECTION POURVUE D'AU MOINS UNE PIÈCE D'INSERTION

(30) Priorität: 24.08.2021 DE 102021121851
(43) Veröffentlichungstag der Anmeldung: 01.03.2023
(73) Patentinhaber: Lisa Dräxlmaier GmbH, 84137 Vilsbiburg (DE)
(72) Erfinder: Esterbauer, Peter, 5282 Ranshofen (AT); Pueschel, Stefan, 4982 Obernberg am Inn (AT); Peterlechner, Hermann, 5145 Neukirchen/Enknach (AT); Greifeneder, Daniel, 4963 St. Peter am Hart (AT); Liedtke, Rainer, 5280 Braunau/Inn (AT)

(56) Entgegenhaltungen:
- EP-A1- 3 804 945
- CH-A5- 634 505
- DE-A1-102019 126 938
- JP-A- S5 168 665
- JP-A- S6 064 816
- US-A- 4 334 846

## Beschreibung

### Technisches Gebiet

Die vorliegende Erfindung betrifft eine Werkzeughälfte zum Herstellen eines Spritzgussteils mit wenigstens einem Einlegeteil und ein Verfahren zum Herstellen eines Spritzgussteils mit wenigstens einem Einlegeteil.

### Stand der Technik

Es ist an sich bekannt bei Spritzgussteilen Einlegeteile, beispielsweise in Form von Schrauben, Bolzen, Stiften, Passstiften und dergleichen zu integrieren. Dafür werden solche Einlegeteile im Bereich einer Kavität eines Spritzgusswerkzeugs angeordnet und mit einem Kunststoff zumindest teilweise umspritzt.

In der DD251103 A1 wird beispielsweise ein Werkzeug zur Herstellung von Verbundkörpern auf der Basis des Formpressens, Spritzpressens und Spritzgießens offenbart. Das Einlegeteil wird hier erwärmt und mit einer urzuformenden Formmasse verbunden. Die Werkzeughälfte umfasst dabei an einer Werkzeugaußenfläche ein Magazin, welches für die Einlegeteile vorgesehen ist. Das Magazin bildet einen Expositionsraum aus, der für ein Einlegeteil den Abschluss einer kraftbewirkten Förderung bildet. Der Expositionsraum ist Teil eines in einen Formhohlraum des Werkzeuges reichenden Führungsweges, in welchem der Formkern gebildet wird.

In der US 4,334,846 A ist ein Werkzeug beschrieben, bei welchem Einlegeteile durch eine Verschiebeeinheit über einen schräg nach oben verlaufenden Kanal in ein horizontales Magazin geschoben werden. Die Verschiebeeinrichtung wirkt gegen die Schwerkraft, was zu einer ungünstigen Energiebilanz führt.

Ähnliche Werkzeuge sind aus CH 634 505 A5, JP S51 68665 A, JP S60 64816 A, EP 3 804 945 A1 und der DE 10 2019 126938 A bekannt.

Das Handling und die Positionierung solcher Einlegeteile im Bereich einer Kavität eines Spritzgusswerkzeugs kann sich mitunter relativ aufwendig gestalten.

Insbesondere die Förderung eines Einlegeteils zu einem Magazin einer Werkzeughälfte oder von einem Magazin der Werkzeughälfte zur geforderten Position ist oft mit aufwendigen und kostenintensiven Peripherien verbunden. Zudem können derartige bekannte Werkzeughälften in der Regel mit langen Zykluszeiten und einem relativ hohen Platzbedarf bei der Spritzgussmaschine selbst einhergehen.

### Beschreibung der Erfindung

Es ist daher die Aufgabe der vorliegenden Erfindung, eine Lösung bereitzustellen, mittels welcher ein Spritzgussteil mit wenigstens einem Einlegeteil besonders einfach und zuverlässig hergestellt werden kann.

Diese Aufgabe wird durch eine Werkzeughälfte für eine Spritzgussmaschine sowie durch ein Verfahren zum Herstellen eines Spritzgussteils mit den Merkmalen der unabhängigen Ansprüche gelöst. Weitere mögliche Ausgestaltungen der Erfindung sind insbesondere in den abhängigen Ansprüchen angegeben.

Die erfindungsgemäße Werkzeughälfte ist für eine Spritzgussmaschine zum Herstellen eines Spritzgussteils mit wenigstens einem Einlegeteil vorgesehen.

Die Werkzeughälfte umfasst einen Formbereich, einen Beförderungskanal, einen Zuführkanal und ein Magazin. Der Formbereich bildet zumindest einen Teil einer Kavität für das Spritzgussteil aus, wobei sich der Beförderungskanal im Inneren der Werkzeughälfte durch den Formbereich hindurch erstreckt und zum Befördern des Einlegeteils zur Kavität dient. Der Zuführkanal ist zum Führen des Einlegeteils in der Werkzeughälfte ausgelegt und erstreckt sich in vertikaler Richtung durch die Werkzeughälfte und mündet in einen Aufnahmebereich des Beförderungskanals. Das Magazin bildet einen Magazinschacht aus, der Magazinschacht dazu vorgesehen ist, das Einlegeteil dem Zuführkanal zuzuführen. Erfindungsgemäß ist dabei vorgesehen, dass das Magazin eine Aufnahmeeinrichtung mit einer Verschiebeeinheit umfasst, wobei die Verschiebeeinheit dazu ausgestaltet ist, das Einlegeteil in einem ersten Bereich aufzunehmen und von diesem ersten Bereich in einen zweiten Bereich zu verschieben, von welchem das Einlegeteil dem Magazinschacht zuführbar ist.

In einem Beförderungspfad eines Einlegeteils von der Aufnahmeeinrichtung zur Kavität im Formbereich dient die Verschiebeeinheit somit dazu, ein Einlegeteil, welches dem Magazin zugeführt wird, zunächst in die Aufnahmeeinheit aufzunehmen und dort in der Verschiebeeinheit zu verschieben. Der Beförderungspfad durch die Werkzeughälfte ist von einem im Beförderungspfad verfahrenden Einlegeteil somit nicht ungehindert bzw. uneingeschränkt verfahrbar, sobald es dem Magazin zugeführt wird. Dieses Unterbrechen der Beförderung des Einlegeteils, das Verschieben und das darauf folgende weitere Verfahren des Einlegeteils gewährleistet, dass Einlegeteile mit einer definierten und homogenen Führung dem Magazinschacht zugeführt werden können.

Durch die Verschiebeeinheit kann zudem sichergestellt werden, dass das Einlegeteil dem Magazinschacht passgenau zugeführt wird, so dass ein Verkeilen oder ein Anecken des Einlegeteils beim Übergang zwischen der Verschiebeeinheit und dem Magazinschacht im Wesentlichen verhindert wird.

Es kann weiterhin vorgesehen sein, dass die Werkzeughälfte eine Positioniereinheit aufweist. Die Positioniereinheit ist dazu ausgelegt, durch eine Bewegung von einer Entformposition in eine Spritzposition einen Schaft des Einlegeteils zu umschließen und dadurch das Einlegeteil aufzunehmen, wenn dieses im Aufnahmebereich des Beförderungskanals angeordnet ist. Anschließend kann die Positioniereinheit das aufgenommene Einlegeteil vom Aufnahmebereich zu einer Spritzgussposition im Bereich des Formbereichs befördern.

Die erfindungsgemäße Werkzeughälfte kann also eine Art integrierte Zuführmechanik umfassen, um wenigstens ein Einlegeteil im Bereich einer Kavität in einer vorgegebenen Spritzgussposition anzuordnen, so dass das Einlegeteil durch Schließen eines Spritzgusswerkzeugs, welches die erfindungsgemäße Werkzeughälfte umfasst, umspritzen kann. Die erfindungsgemäße Werkzeughälfte stellt somit sicher, dass ein durch sie befördertes Einlegeteil auch definiert an seine Spritzgussposition gelangt. Damit können zusätzliche Peripherien eingespart werden.

Insbesondere kann vorgesehen sein, dass es sich bei dem Einlegeteil um ein bolzenartiges Einlegeteil handelt. Unter einem bolzenartigem Einlegeteil ist zu verstehen, dass das Einlegeteil zumindest einen Schaft aufweist, welcher einen runden oder auch beispielsweise einen eckigen Querschnitt aufweisen kann. Bei dem bolzenartigen Einlegeteil kann es sich beispielsweise um eine Schraube, einen Bolzen, einen Stift, einen Passstift oder dergleichen handeln. Mittels der erfindungsgemäßen Werkzeughälfte ist es also möglich, ein solches bolzenartiges Einlegeteil auf ganz einfache Weise im Bereich der Kavität der Werkzeughälfte zu positionieren. Damit ist natürlich nicht ausgeschlossen, dass die erfindungsgemäße Werkzeughälfte auch dazu ausgebildet sein kann, Einlegeteile zu handhaben, die keine bolzenartige Ausgestaltung aufweisen.

Zudem kann vorgesehen sein, dass die Aufnahmeeinrichtung mit einem Eingabekanal verbunden ist, über welchem der Aufnahmeeinrichtung das Einlegeteil zuführbar ist. Der Eingabekanal kann dabei z.B. als ein Schlauch ausgestaltet sein, wobei der Schlauch die Aufnahmeeinrichtung mit einem Reservoir an Einlegeteilen verbindet. Ein derartiges Reservoir kann z.B. ein Rütteltopf sein, der die Einlegeteile vereinzelt dem Schlauch zuführt. Eine Förderung eines Einlegeteils durch den Eingabekanal, insbesondere bei dessen Ausgestaltung als ein Schlauch, kann mittels Druckluft realisiert sein, so dass eine Zufuhr von Einlegeteilen zur Aufnahmeeinrichtung durch die Steuerung des im Eingabekanal herrschenden Drucks gewährleistet ist.

Die Bewegungsrichtung, entlang welcher das Einlegeteil der Aufnahmeeinrichtung aus dem Eingabekanal zugeführt wird, erstreckt sich insbesondere quer, bevorzugt im Wesentlichen senkrecht, zu der Bewegungsrichtung, entlang welcher die Verschiebeeinheit das Einlegeteil in der Aufnahmeeinrichtung vom ersten Bereich in den zweiten Bereich verschiebt. Durch eine derartige quere Ausrichtung der Bewegungsrichtung eines zugeführten Einlegeteils zur Verschiebebewegung des Einlegeteils in der Verschiebeeinheit kann sichergestellt werden, dass das Einlegeteil in seiner Eingangsbewegung in die Aufnahmeeinrichtung zunächst gestoppt oder zumindest entschleunigt werden muss, um die im Beförderungspfad durch die Werkzeughälfte anschließende Bewegung in der Verschiebeeinheit ausführen zu können. Damit kann gewährleistet werden, dass ein zum Beispiel mit hoher Eingangsgeschwindigkeit in die Aufnahmeeinrichtung geführtes Einlegeteils entsprechend verlangsamt wird, wodurch eine ruhigere und sicherere Führung und Verschiebung des Einlegeteils gewährleistet werden kann. Insbesondere eine Ausführung einer Förderung eines Einlegeteils durch den Eingabekanal mittels Druckluft kann eine besonders hohe Eingangsgeschwindigkeit für das Einlegeteil bedeutet, wodurch eine derartige ruhigere und sicherere Führung und Verschiebung notwendig ist.

In einer Ausgestaltung umfasst die Aufnahmeeinrichtung der erfindungsgemäßen Werkzeughälfte einen Prallschutz, mit welchem das Einlegeteil bei Zufuhr in die Aufnahmeeinrichtung kollidiert. Der Prallschutz ist dazu vorgesehen, dass er zumindest einen Anteil der kinetische Energie des Einlegeteils aufnimmt, so dass das Einlegeteil bei Zufuhr in die Aufnahmeeinrichtung zumindest entschleunigt wird.

Vorzugsweise wird im Wesentlichen die gesamte kinetische Energie des Einlegeteils aufgenommen, so dass das Einlegeteil vollständig entschleunigt wird und in der Aufnahmeeinrichtung zum Stillstand kommt.

Der Prallschutz ist dabei vorzugsweise im ersten Bereich der Verschiebeeinheit angeordnet bzw. begrenzt diesen, so dass der Prallschutz das Einlegeteil im ersten Bereich zum Stillstand bringt, damit es aus dieser Stillstandsposition unmittelbar durch die Verschiebeeinheit in den zweiten Bereich verschiebbar ist.

Der Prallschutz stellt somit eine kontrollierte Aufnahme des Einlegeteils in die Aufnahmeeinrichtung sicher, wodurch diese anschließend sicher und ruhig geführt werden kann.

Gemäß einer Ausführungsform verläuft die Bewegungsrichtung des Einlegeteils in der Verschiebeeinheit quer, insbesondere im Wesentlichen senkrecht, zur Erstreckungsrichtung des Magazinschachts. Dabei handelt es sich um die Bewegungsrichtung, entlang welcher die Verschiebeeinheit das Einlegeteil vom ersten Bereich in den zweiten Bereich verschiebt. Dabei kann vorgesehen sein, dass sich der Magazinschacht, gleich der Erstreckungsrichtung des Zuführkanals, in vertikaler Richtung erstreckt. Der Magazinschacht und der Zuführkanal verlaufen somit im Wesentlichen parallel zueinander.

Die Ausrichtung der Bewegungsrichtung des Einlegeteils in der Verschiebeeinheit quer zur Erstreckungsrichtung des Magazinschachts sorgt dafür, dass ein aus der Verschiebeeinheit in den Magazinschacht übergehendes Einlegeteil beim Eintritt in den Magazinschacht entschleunigt und damit besonders ruhig und kontrolliert verfahren kann.

Dadurch, dass sich der Magazinschacht in vertikaler Richtung erstreckt, sind keine Fördermittel oder dergleichen erforderlich, um das Einlegeteil fortzubewegen.

Gemäß der Erfindung fällt das Einlegeteil durch die auf ihn wirkende Gewichtskraft vom zweiten Bereich der Verschiebeeinheit in den Magazinschacht.

Insbesondere in einer Ausgestaltung der Werkzeughälfte, in der die Bewegungsrichtung des Einlegeteils in der Verschiebeeinheit quer oder sogar senkrecht zur Erstreckungsrichtung des Magazinschachts verläuft, kann ein derartiger, allein durch die auf das Einlegeteil wirkende Gewichtskraft bedingter Übergang des Einlegeteils aus der Aufnahmeeinheit in den Magazinschacht realisiert werden. Das Einlegeteil kann dabei z.B. in die Aufnahmeeinheit aufgenommen und durch die Verschiebeeinheit in horizontaler Richtung verschoben werden. Sobald das Einlegeteil dabei den zweiten Bereich der Verschiebeeinheit erreicht, kann dieser mit einer nach unten gerichteten und mit dem vertikal ausgerichteten Magazinschacht verbundenen Öffnung versehen sein, so dass, bedingt durch die Schwerkraft, unmittelbar und ohne weiteres Zutun ein Übergang des Einlegeteils aus dem zweiten Bereich in den Magazinschacht realisiert wird.

Gemäß einer Ausführungsform der Erfindung kann die Verschiebeeinheit derart zum Magazinschacht geneigt sein, dass ein Normalkraft-Vektor eines sich in der Verschiebeeinheit befindlichen Einlegeteils und ein Gewichtskraft-Vektor einer auf dieses Einlegeteil wirkenden Gewichtskraft einen Winkel im Bereich von 10 Grad bis 80 Grad zueinander aufweisen.

Bevorzugt befindet sich der Winkel in einem Bereich zwischen 30 Grad und 60 Grad. Besonders bevorzugt in einem Bereich zwischen 40 Grad und 50 Grad.

Besonders in einer Ausgestaltung der Werkzeughälfte, in der das Einlegeteil vom zweiten Bereich in den Magazinschacht bedingt durch die Schwerkraft fällt, kann dieser Fall durch die Neigung der Verschiebeeinheit weniger abrupt ausgeführt werden und das Einlegeteil kann kontrolliert in den Magazinschacht hinein rutschen.

Dabei kann zudem beim Übergang des Einlegeteils vom zweiten Bereich der Verschiebeeinheit in den Magazinschacht eine kontinuierliche Verkleinerung des Winkels zwischen dem Normalkraft-Vektor des Einlegeteils und dem Gewichtskraft-Vektor stattfinden, so dass das Einlegeteil nicht ungehindert in den Magazinschacht hinein fällt, sondern einen kontinuierlich beschleunigenden Übergang zwischen dem zweiten Bereich und dem Magazinschacht ausführt.

Insbesondere zum Zweck eines weicheren Übergangs des Einlegeteil vom zweiten Bereich in den Magazinschacht kann vorgesehen sein, dass sich der Magazinschacht nicht gesamtheitlich entlang der gleichen Richtung erstreckt, sonders es kann vorgesehen sein, dass der Magazinschacht an seinem der Verschiebeeinheit zugewandten Endbereich einen geneigten Verlauf aufweist. Dieser geneigte Verlauf entspricht dabei der Neigung, welche die Verschiebeeinheit gegenüber dem Magazinschacht aufweist, so dass sich der Magazinschacht mit seinem der Verschiebeeinheit zugewandten Endbereich also der Verschiebeeinheit entgegen neigt. Dadurch kann der weiche Übergang des Einlegeteils nicht nur durch die Neigung der Verschiebeeinheit zum Magazinschacht, sondern auch durch eine abschnittsweise Neigung des Magazinschachts selbst gewährleistet werden.

Gemäß einer weiteren Ausführungsform umfasst die Verschiebeeinheit ein Verschiebeelement, welches zur Aufnahme des Einlegeteils in der Verschiebeeinheit ausgestaltet ist, und eine Verschiebung des Verschiebeelements pneumatisch ausführbar ist.

Dazu kann die Verschiebeeinheit einen Pneumatikzylinder und einen in diesem Pneumatikzylinder pneumatisch verschiebbaren Pneumatikkolben aufweisen. Der Pneumatikzylinder ist dabei vorzugsweise fest mit der Aufnahmeeinrichtung verbunden. Der Pneumatikkolben ist über eine Kolbenstange mit der Verschiebeeinheit verbunden. Wird also ein Druck im Pneumatikzylinder angelegt, verschiebt sich der Pneumatikkolben und nimmt das Verschiebeelement in seiner Bewegung über die Kolbenstange mit. Ein im Verschiebeelement aufgenommenes Einlegeteil kann entsprechend pneumatisch zwischen dem ersten Bereich und dem zweiten Bereich verschoben werden.

In einer alternativen Ausführungsform kann auch vorgesehen sein, dass anstelle einer pneumatischen Ausführung eine elektro-mechanische Ausführung realisiert ist.

Die pneumatische Verschiebung des Verschiebeelements kann dabei von einer Steuereinheit kontrolliert, geregelt und definiert sein, so dass eine anforderungsgenaue und in den gesamten Prozess der Führung der Einlegeteile zielgerichtet eingegliederte Verschiebung realisiert werden kann.

In einer Ausführungsform der Erfindung ist vorgesehen, dass die Werkzeughälfte eine Vereinzelungsvorrichtung zwischen dem Magazinschacht und dem Zuführkanal umfasst, so dass sich im Magazinschacht des Magazins befindliche Einlegeteile vereinzelt dem Zuführkanal zuführbar sind.

Die Vereinzelungsvorrichtung kann dabei insbesondere durch eine Steuereinheit gesteuert sein, welche die Zuführung eines Einlegeteils in den Zuführkanal nur bei entsprechender Anforderung des Einlegeteils schaltet.

Insbesondere kann vorgesehen sein, dass die Vereinzelungsvorrichtung pneumatisch betätigbar ist. In einer alternativen Ausführungsform kann auch vorgesehen sein, dass anstelle einer pneumatischen Ausführung eine elektro-mechanische Ausführung realisiert ist.

Gemäß einer weiteren Ausführungsform der Erfindung umfasst das Magazin wenigstens eine Sensoreinheit zur Messung des Füllstands des Magazins.

Eine von der Sensoreinheit festgestellte Information über den Füllstand des Magazins kann einer Steuereinheit zugeführt werden. Dabei kann es sich um die gleiche Steuereinheit handeln, die in einer Ausführungsform der Werkzeughälfte mit einer Vereinzelungsvorrichtung die Steuerung dieser übernimmt und/oder um die gleiche Steuereinheit handeln, die die Verschiebeeinheit steuert.

Die Information über den Füllstand des Magazins kann in der Steuereinheit entsprechend genutzt werden um z.B. weitere Einlegeteile für das Magazin anzufordern oder eine entsprechende Anforderung abzubrechen, um eine Zufuhr von weiteren Einlegeteilen in den Magazinschacht durch Steuerung der Verschiebeeinheit zu unterbrechen oder auszuführen oder um über die Vereinzelungsvorrichtung die Zufuhr der Einlegeteile im Magazinschacht in den Zuführkanal zu bestimmen.

Bei dem erfindungsgemäßen Verfahren zum Herstellen eines Spritzgussteils mit wenigstens einem Einlegeteil wird die erfindungsgemäße Werkzeughälfte oder eine mögliche Ausgestaltung der erfindungsgemäßen Werkzeughälfte verwendet, wobei zunächst das Einlegeteil der Aufnahmeeinrichtung zugeführt wird, wonach das Einlegeteil in der Verschiebeeinheit in der Aufnahmeeinrichtung verschoben wird. Anschließend wird das Einlegeteil aus der Verschiebeeinheit dem Magazinschacht des Magazins zugeführt, aus welchem es dem Zuführkanal zugeführt wird, über welchen es in den Aufnahmebereich des Beförderungskanal gelangt. Danach wird eine Positioniereinheit von einer Entformposition in eine Spritzposition bewegt, in Folge dessen die Positioniereinheit das im Aufnahmebereich angeordnete Einlegeteil aufnimmt und durch den Beförderungskanal zu einer Spritzgussposition im Bereich des Formbereichs befördert. Anschließend wird eine Spritzgussmaschine zum Herstellen des Spritzgussteils mittels einer Steuerung der Werkzeughälfte angesteuert, sodass ein die Werkzeughälfte umfassendes Spritzgusswerkzeug der Spritzgussmaschine geschlossen wird, ein Kunststoff in die Kavität gespritzt wird und das in der Spritzgussposition angeordnete Einlegeteil unter Ausbildung des Spritzgussteils vom Kunststoff umspritzt wird.

Die Werkzeughälfte kann eine Sensorik aufweisen, welche dazu ausgelegt ist, eine Position des Einlegeteils und/oder der Positioniereinheit zu ermitteln und entsprechende Positionssignale an eine Steuerung der Werkzeughälfte zu übermitteln, wobei die Steuerung dazu eingerichtet sein kann, in Abhängigkeit von den Sensorsignalen die Positioniereinheit zum Befördern des Einlegeteils in die Spritzgussposition anzusteuern.

Die Steuerung kann dazu eingerichtet sein, die Spritzgussmaschine zum Herstellen des Spritzgussteils anzusteuern, wenn die Steuerung anhand der Sensorsignale ermittelt hat, dass das Einlegeteil in der Spritzgussposition angeordnet ist.

Die Werkzeughälfte kann mehrere der Positioniereinheiten aufweisen, wobei der Zuführkanal sich in der Anzahl der Positioniereinheiten entsprechende Zuführkanalabschnitte verzweigt, die in jeweiligen Aufnahmebereichen jeweiliger Beförderungskanäle münden.

Weitere Vorteile, Merkmale und Einzelheiten der Erfindung können sich aus der nachfolgenden Beschreibung möglicher Ausführungsbeispiele sowie anhand der Zeichnung ergeben. Die vorstehend in der Beschreibung genannten Merkmale und Merkmalskombinationen sowie die nachfolgend in der Figurenbeschreibung und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

### Figurenbeschreibung

Die Zeichnung zeigt in:
- Fig. 1: eine Perspektivansicht einer Werkzeughälfte;
- Fig. 2: eine Detailansicht der Aufnahmeeinrichtung des Magazins;
- Fig. 3: eine Detailansicht des Magazins;
- Fig. 4: eine Detailansicht des Magazinschachts.

In den Figuren sind gleiche oder funktionsgleiche Elemente mit den gleichen Bezugszeichen versehen worden.

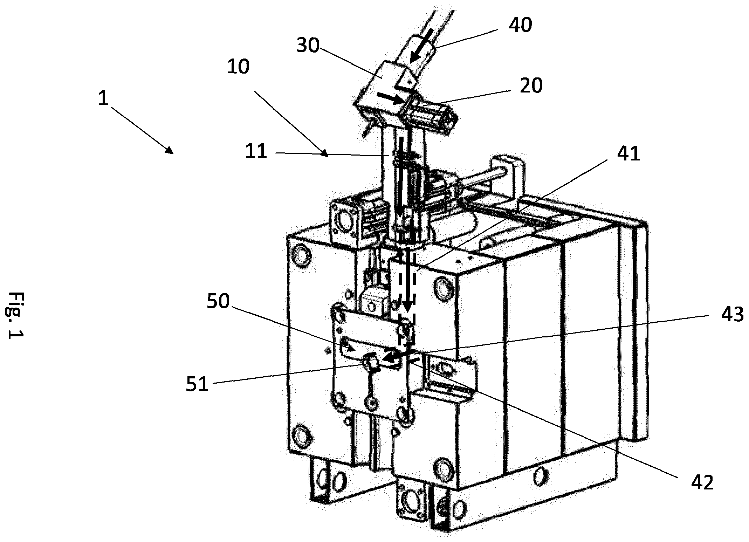

Figur 1 zeigt eine Perspektivansicht einer Werkzeughälfte 1. Oberseitig an der Werkzeughälfte 1 ist ein Magazin 10 zum Bereitstellen von Einlegeteilen angeordnet. Vorderseitig an der Werkzeughälfte 1 ist ein Teil eines Formbereichs 50 mit einer Kavität 51 ausgebildet. Die Werkzeughälfte 1 ist als Bestandteil eines Spritzgusswerkzeugs vorgesehen und Teil einer Spritzgussmaschine, um ein Spritzgussteil mit wenigstens einem Einlegeteil (hier nicht zu sehen) herzustellen. Dazu wird das wenigstens eine Einlegeteil aus dem Magazin 10, durch die Werkzeughälfte 1 hindurch und zur Kavität 51 befördert. Ein derartiger Beförderungspfad ist anhand von Pfeilen verdeutlicht dargestellt. Ist das Einlegeteil in der Kavität 51 angeordnet, wird das Spritzgusswerkzeug geschlossen und anschließend z.B. ein Kunststoff in den Formbereich 50 gespritzt, so dass ein in der Kavität 51 angeordnetes Einlegeteil umspritzt wird und das Spritzgussteil hergestellt wird.

Die Einlegeteile sind dem Magazin 10 dabei über einen mit diesem seitlich verbundenen Eingabekanal 40 zuführbar. Bei dem Eingabekanal 40 handelt es sich um einen mittels Druckluft betriebenen Schlauch, welcher z.B. von einem Rütteltopf vereinzelte Einlegeteile zum Magazin 10 befördert.

Die aus dem Eingabekanal 40 dem Magazin 10 zugeführten Einlegeteile 2 werden von einer Aufnahmeeinrichtung 30 des Magazins 10 an der Oberseite des Magazins 10 aufgenommen. In der Aufnahmeeinrichtung 30 werden die Einlegeteile durch eine Verschiebeeinheit 20 der Aufnahmeeinrichtung 30 derart verschoben, dass sie einem Magazinschacht 11 des Magazins 10 zuführbar sind. Der Magazinschacht 11 erstreckt sich dabei im Wesentlichen in vertikaler Richtung von der Aufnahmeeinrichtung 30 aus nach unten, so dass dem Magazinschacht 11 zugeführte Einlegeteile schwerkraftbedingt im Magazinschacht 11 nach unten fallen.

Eine am unteren Ende des Magazinschachts 11 angeordnete Vereinzelungsvorrichtung 44 dient dazu, bei entsprechender Anforderung eines Einlegeteils, ein Einlegeteil aus dem Magazinschacht 11 zu vereinzeln und einem Zuführkanal 41 zuzuführen.

Der Zuführkanal 41 erstreckt sich im Inneren der Werkzeughälfte 1, weswegen er hier mit gestrichelten Linien dargestellt ist. Die Erstreckungsrichtung des Zuführkanals 41 ist dabei im Wesentlichen gleich der des Magazinschachts 11 in vertikaler Richtung nach unten und endet in einem Aufnahmebereich 43 eines Beförderungskanals 42. Der Beförderungskanal 42 ist ebenfalls mit gestrichelten Linien dargestellt.

Ein über den Zuführkanal 41 im Aufnahmebereich 43 des Beförderungskanals 42 angeordnetes Einlegeteil kann abschließend durch eine nicht dargestellte Positioniereinheit von einer Entformposition in eine Spritzposition bewegt werden. Die Positioniereinheit nimmt dabei das im Aufnahmebereich 43 angeordnete Einlegeteil auf und befördert dieses im Wesentlichen in horizontaler Richtung durch den Beförderungskanal 42 in die Kavität 51 zu einer Spritzgussposition im Formbereich 50 an der Vorderseite der Werkzeughälfte 1. Folglich kann der eingangs beschrieben Spritzgussprozess ausgeführt werden.

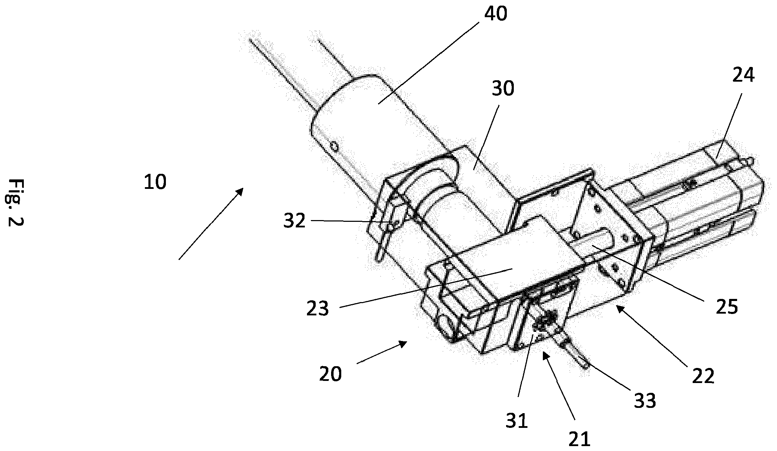

In Figur 2 ist eine Detailansicht der Aufnahmeeinrichtung 30 des Magazins 10 gezeigt. Der Körper der Aufnahmeeinrichtung 30 ist dabei durchsichtig dargestellt, so dass die darin liegende Verschiebeeinheit 20 zu sehen ist. Es zeigt sich, dass die Verschiebeeinheit 20 ein Verschiebeelement 23 umfasst, welches zur Aufnahme eines Einlegeteils in der Verschiebeeinheit 20 ausgestaltet ist. Das Verschiebeelement 23 ist dabei zwischen einem ersten Bereich 21 der Verschiebeeinheit 20 und einem zweiten Bereich 22 der Verschiebeeinheit 20 verschiebbar. Ein durch den mit der Aufnahmeeinrichtung 30 verbundenen Eingabekanal 40 der Verschiebeeinheit 20 zugeführtes Einlegeteil wird im ersten Bereich 21 vom Verschiebeelement 23 aufgenommen. Das Verschiebeelement 23 kann das Einlegeteil anschließend von diesem ersten Bereich 21 in den zweiten Bereich 22 verschieben. Der zweite Bereich 22 ist dabei derart mit dem Magazinschacht (hier nicht dargestellt) des Magazins 10 verbunden, dass ein sich im zweiten Beriech 22 befindliches Einlegeteil unmittelbar schwerkraftbedingt in den Magazinschacht übergeht.

Das Verschiebeelement 23 ist dabei pneumatisch bewegbar. Dazu weist die Verschiebeeinheit 20 einen Pneumatikzylinder 24 und einen in diesem pneumatisch verschiebbaren Pneumatikkolben (nicht dargestellt) auf. Der Pneumatikzylinder 24 ist fest mit der Aufnahmeeinrichtung 30 an dessen Außenseite in der Nähe des zweiten Bereichs 22 verbunden. Der Pneumatikkolben ist über eine Kolbenstange 25 mit dem Verschiebeelement 23 verbunden. Wird also ein Druck im Pneumatikzylinder 24 angelegt, verschiebt sich der Pneumatikkolben und nimmt das Verschiebeelement 23 in seiner Bewegung über die Kolbenstange 25 mit. Ein im Verschiebeelement 23 aufgenommenes Einlegeteil kann entsprechend pneumatisch zwischen dem ersten Bereich 21 und dem zweiten Bereich 22 verschoben werden.

Weiterhin ist in Figur 2 ein Verbindungsschalter 32 erkennbar, welcher in der Nähe des Eingabekanals 40 an der Aufnahmeeinrichtung 30 angeordnet ist. Dieser Verbindungsschalter 32 dient dazu, zu erkennen, ob die Verbindung zwischen dem Eingabekanal 40 und der Aufnahmeeinrichtung 30 sachgemäß hergestellt ist. Insbesondere in einer Ausgestaltung des Eingabekanals 40 als ein Schlauch, wir dessen Ende mit einem Verbindungsabschnitt des Eingabekanals 40 mechanisch fest mit der Aufnahmeeinrichtung 30 verbunden. Dies muss sichergestellt werden, damit die im Eingabekanal 40 geführten Einlegeteile der Aufnahmeeinrichtung 30 passend zugeführt werden können.

Zudem zeigt Figur 2, dass die Aufnahmeeinrichtung 30 einen Prallschutz 31 umfasst, mit welchem ein Einlegeteil bei Zufuhr in die Aufnahmeeinrichtung 30 durch den Eingabekanal 40 kollidiert. Der Prallschutz 31 ist entsprechend auf der dem Eingabekanal 40 gegenüberliegenden Seite der Aufnahmeeinrichtung 30 angeordnet. Der Prallschutz 31 nimmt bei einer Kollision die kinetische Energie des Einlegeteils auf, so dass das Einlegeteil entschleunigt wird und in der Aufnahmeeinrichtung 30 vorzugsweise vollständig zum Stillstand kommt. Der Prallschutz 31 ist entsprechend am ersten Bereich 21 bei der Verschiebeeinheit 20 angeordnet und begrenzt diesen ersten Bereich 21, so dass der Prallschutz 31 das Einlegeteil im ersten Bereich 21 im Verschiebeelement 23 zum Stillstand bringt. Der Prallschutz 31 stellt sicher, dass eine kontrollierte Aufnahme des Einlegeteils in die Aufnahmeeinrichtung 30 stattfindet, wodurch dieses anschließend sicher und ruhig aus der Stillstandsposition vom Verschiebeelement 23 in den zweiten Bereich verschobene werden kann.

Außerdem ist ein Aufnahmeschalter 33 zu sehen, welcher am Prallschutz 31 angeordnet ist. Der Aufnahmeschalter 33 dient dazu, den Aufprall eines Einlegeteils am Prallschutz 31 zu registrieren bzw. zu detektieren. Eine separate Steuereinheit kann diese Information vom Aufnahmeschalter 33 erhalten und weiteren Schritte zur Führung des Einlegeteils durch die Werkzeughälfte steuern.

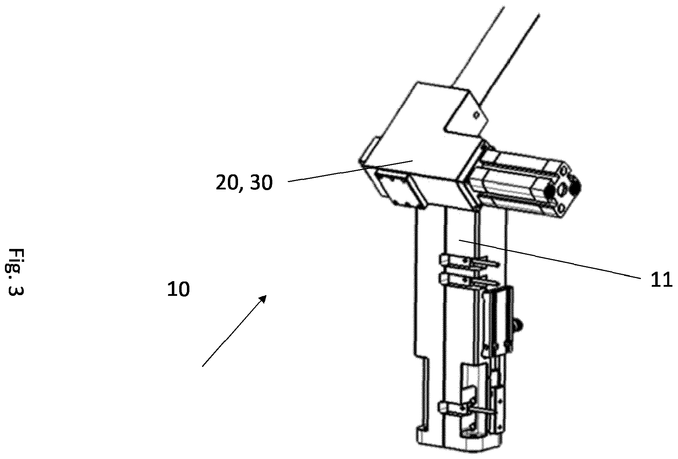

Figur 3 zeigt eine Detailansicht des Magazins 10. Dabei ist aus Figur 3 ersichtlich, dass die Aufnahmeeinrichtung 30 zum Magazinschacht 11 geneigt ist. Die Neigung ist derart ausgebildet, dass ein Normalkraft-Vektor eines sich in der Verschiebeeinheit 20 in der Aufnahmeeinrichtung 30 befindlichen Einlegeteils und ein Gewichtskraft-Vektor einer auf dieses Einlegeteil wirkenden Gewichtskraft einen Winkel im Bereich von etwa 45 Grad zueinander aufweisen.

Eine derartige Neigung der Verschiebeeinheit 20 zum Magazinschacht 11 sorgt für einen sanften Übergang eines Einlegeteils, wenn dieses vom zweiten Bereich der Verschiebeeinheit 20 in den Magazinschacht 11 übergeht.

Dadurch, dass sich der Magazinschacht 11 im Wesentlichen in vertikaler Richtung erstreckt, würde ein in den zweiten Bereich verschobenes Einlegeteil in einer Ausführungsform ohne diese Neigung sehr abrupt in den Magazinschacht 11 fallen. Das kann z.B. zum verkannten des Einlegeteils oder zur Beschädigung eines Bauteils führen. Durch die Neigung kann dieser Fall weniger abrupt ausgeführt werden und das Einlegeteil kann kontrolliert in den Magazinschacht 11 hinein rutschen.

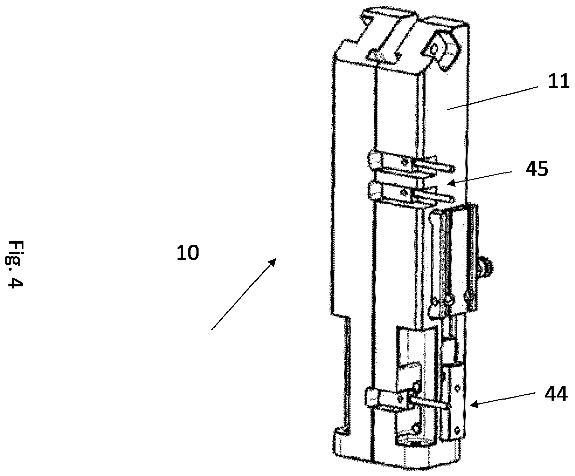

Figur 4 zeigt eine Detailansicht des Magazinschachts 11. Das obere Ende des Magazinschachts 11 entspricht dabei dem der Aufnahmeeinrichtung zugewandten Ende des Magazinschachts 11. Der Magazinschacht 11 ist an diesem Ende abgeschrägt ausgeführt, um sich an eine wie in Figur 2 dargestellte geneigte Aufnahmeeinrichtung anzupassen. Durch diese Abschrägung des der Aufnahmeeinrichtung zugewandten Endes des Magazinschachts 11 kann bei einem Übergang eines Einlegeteils vom zweiten Bereich der Verschiebeeinheit in den Magazinschacht 11 eine kontinuierliche Verkleinerung des Winkels zwischen dem Normalkraft-Vektor des Einlegeteils und dem Gewichtskraft-Vektor stattfinden, so dass das Einlegeteil nicht ungehindert in den Magazinschacht 11 hinein fällt, sondern einen kontinuierlich beschleunigenden Übergang zwischen dem zweiten Bereich und dem Magazinschacht 11 ausführt.

Zudem ist in Figur 4 zu sehen, dass am unteren Ende des Magazinschachts 11 eine Vereinzelungsvorrichtung 44 angeordnet ist, mit welcher sich im Magazinschacht 11 des Magazins 10 befindliche Einlegeteile vereinzelt dem Zuführkanal zuführen lassen können. Die Vereinzelungsvorrichtung 44 kann dabei durch eine hier nicht dargestellte Steuereinheit der Werkzeughälfte gesteuert sein, welche die Zuführung eines Einlegeteils in den Zuführkanal nur bei entsprechender Anforderung des Einlegeteils schaltet. Außerdem zeigt Figur 4 eine Sensoreinheit 45 etwa mittig am Magazinschacht 11 des Magazins 10. Die Sensoreinheit 45 dient dabei zur Messung des Füllstands des Magazins 10, wobei eine von der Sensoreinheit 45 festgestellte Information über den Füllstand des Magazins 10 der Steuereinheit zugeführt werden kann.

Die erfindungsgemäße Werkzeughälfte stellt somit eine Führung zumindest eines Einlegeteils zur Verfügung, mittels welcher ein Spritzgussteil mit wenigstens einem Einlegeteil besonders einfach und zuverlässig hergestellt werden kann.

### BEZUGSZEICHENLISTE

- 1: Werkzeughälfte

- 10: Magazin
- 11: Magazinschacht

- 20: Verschiebeeinheit
- 21: erster Bereich
- 22: zweiter Bereich
- 23: Verschiebeelement
- 24: Pneumatikzylinder
- 25: Kolbenstange

- 30: Aufnahmeeinrichtung
- 31: Prallschutz
- 32: Verbindungsschalter
- 33: Aufnahmeschalter

- 40: Eingabekanal
- 41: Zuführkanal
- 42: Beförderungskanal
- 43: Aufnahmebereich
- 44: Vereinzelungsvorrichtung
- 45: Sensoreinheit

- 50: Formbereich
- 51: Kavität

## Patentansprüche

1. Werkzeughälfte (1) für eine Spritzgussmaschine zum Herstellen eines Spritzgussteils mit wenigstens einem Einlegeteil, umfassend:
- einen Formbereich (50), der zumindest einen Teil einer Kavität (51) für das Spritzgussteil bildet;
- einen sich im Inneren der Werkzeughälfte (1) und durch den Formbereich (50) hindurch erstreckenden Beförderungskanal (42) zum Befördern des Einlegeteils zur Kavität (51);
- einen zum Führen des Einlegeteils in der Werkzeughälfte (1) ausgelegten Zuführkanal (41), der sich in vertikaler Richtung durch die Werkzeughälfte (1) erstreckt und in einen Aufnahmebereich (43) des Beförderungskanals (42) mündet und
- ein Magazin (10) mit einem Magazinschacht (11), wobei der Magazinschacht (11) dazu vorgesehen ist, das Einlegeteil dem Zuführkanal (41) zuzuführen,
wobei das Magazin (10) eine Aufnahmeeinrichtung (30) mit einer Verschiebeeinheit (20) umfasst, wobei die Verschiebeeinheit (20) dazu ausgestaltet ist, das Einlegeteil in einem ersten Bereich (21) aufzunehmen und von diesem ersten Bereich (21) in einen zweiten Bereich (22) zu verschieben, von welchem das Einlegeteil dem Magazinschacht (11) zuführbar ist
**dadurch gekennzeichnet, dass**
das Einlegeteil durch die auf ihn wirkende Gewichtskraft vom zweiten Bereich (22) der Verschiebeeinheit (20) in den Magazinschacht (11) fällt.

2. Werkzeughälfte (1) nach Anspruch 1,
**dadurch gekennzeichnet, dass** die Aufnahmeeinrichtung (30) mit einem Eingabekanal (40) verbunden ist, über welchem der Aufnahmeeinrichtung (30) das Einlegeteil zuführbar ist.

3. Werkzeughälfte (1) nach einem der vorhergehenden Ansprüche,
**dadurch gekennzeichnet, dass** die Aufnahmeeinrichtung (30) einen Prallschutz (31) umfasst, mit welchem das Einlegeteil bei Zufuhr in die Aufnahmeeinrichtung (30) kollidiert, wobei der Prallschutz (31) dazu vorgesehen ist, dass er zumindest einen Anteil der kinetische Energie des Einlegeteils aufnimmt, so dass das Einlegeteil bei Zufuhr in die Aufnahmeeinrichtung (30) zumindest entschleunigt wird.

4. Werkzeughälfte (1) nach einem der vorhergehenden Ansprüche,
**dadurch gekennzeichnet, dass** die Bewegungsrichtung des Einlegeteils in der Verschiebeeinheit (20), entlang welcher die Verschiebeeinheit (20) das Einlegeteil vom ersten Bereich (21) in den zweiten Bereich (22) verschiebt, quer, insbesondere im Wesentlichen senkrecht, zur Erstreckungsrichtung des Magazinschachts (11) verläuft.

5. Werkzeughälfte (1) nach einem der vorhergehenden Ansprüche,
**dadurch gekennzeichnet, dass** die Verschiebeeinheit (20) derart zum Magazinschacht (11) geneigt ist, dass ein Normalkraft-Vektor eines sich in der Verschiebeeinheit (20) befindlichen Einlegeteils und ein Gewichtskraft-Vektor einer auf dieses Einlegeteil wirkenden Gewichtskraft einen Winkel im Bereich von 10 Grad bis 80 Grad zueinander aufweisen.

6. Werkzeughälfte (1) nach einem der vorhergehenden Ansprüche,
**dadurch gekennzeichnet, dass** die Verschiebeeinheit (20) ein Verschiebeelement (23) umfasst, welches zur Aufnahme des Einlegeteils in der Verschiebeeinheit (20) ausgestaltet ist, und eine Verschiebung des Verschiebeelements (23) pneumatisch ausführbar ist.

7. Werkzeughälfte (1) nach einem der vorhergehenden Ansprüche,
**dadurch gekennzeichnet, dass** die Werkzeughälfte (1) eine Vereinzelungsvorrichtung (44) zwischen dem Magazinschacht (11) und dem Zuführkanal (41) umfasst, so dass sich im Magazinschacht (11) des Magazins (10) befindliche Einlegeteile vereinzelt dem Zuführkanal (41) zuführbar sind.

8. Werkzeughälfte (1) nach einem der vorhergehenden Ansprüche,
**dadurch gekennzeichnet, dass** das Magazin (10) wenigstens eine Sensoreinheit (45) zur Messung des Füllstands des Magazins (10) umfasst.

9. Verfahren zum Herstellen eines Spritzgussteils mit wenigstens einem Einlegeteil mittels einer Werkzeughälfte (1) nach einem der vorhergehenden Ansprüche, umfassend die Schritte:
- Zuführen des Einlegeteils in die Aufnahmeeinrichtung (30);
- Verschieben des Einlegeteils in der Aufnahmeeinrichtung (30) durch die Verschiebeeinheit (20);
- Zuführen des Einlegeteils von der Verschiebeeinheit (20) in den Magazinschacht (11) des Magazins (10);
- Zuführen des Einlegeteils vom Magazinschacht (11) in den Zuführkanal (41);
- Zuführen des Einlegeteils über den Zuführkanal (41) in den Aufnahmebereich (43) des Beförderungskanals (42);
- Bewegen einer Positioniereinheit von einer Entformposition in eine Spritzposition, in Folge dessen die Positioniereinheit das im Aufnahmebereich (43) angeordnete Einlegeteil aufnimmt und durch den Beförderungskanal (42) zu einer Spritzgussposition im Bereich des Formbereichs (50) befördert;
- Ansteuern einer Spritzgussmaschine zum Herstellen des Spritzgussteils mittels einer Steuerung der Werkzeughälfte (1), sodass ein die Werkzeughälfte (1) umfassendes Spritzgusswerkzeug der Spritzgussmaschine geschlossen, ein Kunststoff in die Kavität (51) gespritzt und das in der Spritzgussposition angeordnete Einlegeteil unter Ausbildung des Spritzgussteils vom Kunststoff umspritzt wird.

## Claims

1. Mold-half (1) for an injection molding machine for producing an injection-molded part with at least one insert, comprising:
- a molding area (50) which forms at least part of a cavity (51) for the injection-molded part;
- a conveying channel (42) extending inside the mold half (1) and through the mold area (50) for conveying the insert to the cavity (51);
- a feed channel (41) designed to guide the insert in the mold half (1), which extends vertically through the mold half (1) and opens into a receiving area (43) of the conveyor channel (42), and
- a magazine (10) with a magazine shaft (11), wherein the magazine shaft (11) is provided for feeding the insert to the feed channel (41),
wherein the magazine (10) comprises a receiving device (30) with a offset slide (20), wherein the offset slide (20) is designed to receive the insert part in a first region (21) and to displace it from this first region (21) into a second region (22), from which the insert part can be fed to the magazine shaft (11),
**characterized in that**
the insert falls from the second area (22) of the offset slide (20) into the magazine shaft (11) due to the weight force acting on it.

2. Mold-half (1) according to claim 1,
**characterized in that** the receiving device (30) is connected to an input channel (40) via which the insert can be fed to the receiving device (30).

3. Mold-half (1) according to one of the preceding claims,
**characterized in that** the receiving device (30) comprises an impact guard (31) with which the insert collides when fed into the receiving device (30), the impact guard (31) is used to absorb at least a percentage of the kinetic energy of the insert, so that the insert is at least decelerated when fed into the receiving device (30).

4. Mold-half (1) according to one of the preceding claims,
**characterized in that** the direction of movement of the insert in the offset slide (20), along which the offset slide (20) displaces the insert from the first region (21) into the second region (22), runs transversely, in particular essentially perpendicularly, to the direction in which the magazine shaft (11) extends.

5. Mold-half (1) according to one of the preceding claims,
**characterized in that** the offset slide (20) is inclined with respect to the magazine shaft (11) in such a way that a normal force vector of an insert located in the offset slide (20) and a weight force vector of a weight force acting on this insert have an angle to one another in the range from 10 degrees to 80 degrees.

6. Mold-half (1) according to one of the preceding claims,
**characterized in that** the offset slide (20) comprises a offset slide element(23) which is designed to receive the insert in the offset slide (20), and displacement of the offset slide element (23) can be carried out pneumatically.

7. Mold-half (1) according to one of the preceding claims,
**characterized in that** the tool half (1) comprises a separating device (44) between the magazine shaft (11) and the feed channel (41), so that inserts located in the magazine shaft (11) of the magazine (10) can be fed to the feed channel (41) separately.

8. Mold-half (1) according to one of the preceding claims,
**characterized in that** the magazine (10) comprises at least one sensor unit (45) for measuring the fill level of the magazine (10) .

9. Method for producing an injection molded part with at least one insert part by means of a mold half (1) according to one of the preceding claims, comprising the steps of:
- Feeding the insert into the receiving device (30);
- Displacement of the insert in the receiving device (30) by the offset slide (20);
- Feeding the insert from the offset slide (20) into the magazine shaft (11) of the magazine (10);
- Feeding the insert from the magazine shaft (11) into the feed channel (41);
- Feeding the insert via the feed channel (41) into the receiving area (43) of the conveyor channel (42);
- Moving a positioning unit from a demolding position to an injection position, as a result of which the positioning unit picks up the insert arranged in the receiving area (43) and conveys it through the conveyor channel (42) to an injection molding position in the area of the molding area (50);
- Control of an injection molding machine for producing the injection molded part by means of a control of the mold-half (1), so that an injection molding tool of the injection molding machine comprising the mold half (1) is closed, a plastic is injected into the cavity (51) and the plastic is injected around the insert arranged in the injection molding position, forming the injection molded part.

## Revendications

1. Demi-moule (1) pour une machine de moulage par injection pour la fabrication d'une pièce moulée par injection avec au moins une pièce d'insertion, comprenant :
- une zone de moulage (50) qui forme au moins une partie d'une cavité (51) pour la pièce moulée par injection ;
- un canal de transport (42) s'étendant à l'intérieur du demi-moule (1) et à travers la zone de moulage (50) pour transporter la pièce d'insertion vers la cavité (51) ;
- un canal d'alimentation (41) conçu pour guider la pièce d'insertion dans le demi-moule (1), qui s'étend dans le sens vertical à travers le demi-moule (1) et débouche dans une zone de réception (43) du canal de transport (42) et
- un magasin (10) avec un puits de magasin (11), le puits de magasin (11) étant prévu pour amener la pièce d'insertion au canal d'alimentation (41),
le magasin (10) comprenant un dispositif de réception (30) avec une unité de déplacement (20), l'unité de déplacement (20) étant conçue pour recevoir la pièce d'insertion dans une première zone (21) et pour la déplacer de cette première zone (21) dans une deuxième zone (22), à partir de laquelle la pièce d'insertion peut être amenée au puits de magasin (11),
**caractérisé en ce que**
l'élément d'insertion tombe de la deuxième zone (22) de l'unité de déplacement (20) dans le puits de magasin (11) sous l'effet du poids qui agit sur lui.

2. Demi-outil (1) selon la revendication 1,
**caractérisé en ce que** le dispositif de réception (30) est relié à un canal d'entrée (40) par lequel la pièce d'insertion peut être amenée au dispositif de réception (30).

3. moitié d'outil (1) selon l'une des revendications précédentes, **caractérisée en**
**ce que** le dispositif de réception (30) comprend une protection contre les chocs (31) avec laquelle la pièce d'insertion entre en collision lors de l'amenée dans le dispositif de réception (30), la protection contre les chocs (31) étant prévue pour absorber au moins une partie de l'énergie cinétique de la pièce d'insertion, de sorte que la pièce d'insertion est au moins décélérée lors de l'amenée dans le dispositif de réception (30).

4. moitié d'outil (1) selon l'une des revendications précédentes, **caractérisée en**
**ce que** la direction de déplacement de la pièce d'insertion dans l'unité de déplacement (20), le long de laquelle l'unité de déplacement (20) déplace la pièce d'insertion de la première zone (21) dans la deuxième zone (22), s'étend transversalement, en particulier essentiellement perpendiculairement, à la direction d'extension du puits de magasin (11).

5. Demi-outil (1) selon l'une des revendications précédentes,
**caractérisé en ce que** l'unité de déplacement (20) est inclinée par rapport au puits de magasin (11) de telle sorte qu'un vecteur de force normale d'une pièce d'insertion se trouvant dans l'unité de déplacement (20) et un vecteur de force de poids d'une force de poids agissant sur cette pièce d'insertion présentent entre eux un angle compris entre 10 degrés et 80 degrés.

6. moitié d'outil (1) selon l'une des revendications précédentes, **caractérisée en**
**ce que** l'unité de déplacement (20) comprend un élément de déplacement (23) , qui est configuré pour recevoir la pièce d'insertion dans l'unité de déplacement (20), et un déplacement de l'élément de déplacement (23) est exécutable de manière pneumatique.

7. moitié d'outil (1) selon l'une des revendications précédentes,
**caractérisée en ce que** la moitié d'outil (1) comprend un dispositif d'individualisation (44) entre le puits de magasin (11) et le canal d'alimentation (41), de sorte que les pièces d'insertion se trouvant dans le puits de magasin (11) du magasin (10) peuvent être amenées individuellement au canal d'alimentation (41).

8. demi outil (1) selon l'une des revendications précédentes,
**caractérisé en ce que** le magasin (10) comprend au moins une unité de détection (45) pour mesurer le niveau de remplissage du magasin (10) .

9. Procédé de fabrication d'une pièce moulée par injection avec au moins une pièce d'insertion au moyen d'un demi-moule (1) selon l'une des revendications précédentes, comprenant les étapes suivantes :
- Amenée de l'insert dans le dispositif de réception (30) ;
- Déplacement de la pièce à insérer dans le dispositif de réception (30) par l'unité de déplacement (20) ;
- amener l'insert de l'unité de déplacement (20) dans le puits (11) du magasin (10) ;
- Alimentation de la pièce à insérer depuis le puits de magasin (11) dans le canal d'alimentation (41) ;
- l'amenée de l'insert par le canal d'amenée (41) dans la zone de réception (43) du canal de transport (42) ;
- le déplacement d'une unité de positionnement d'une position de démoulage à une position d'injection, à la suite de quoi l'unité de positionnement saisit la pièce d'insertion disposée dans la zone de réception (43) et la transporte à travers le canal de transport (42) jusqu'à une position de moulage par injection dans la zone de moulage (50) ;
- Commande d'une machine de moulage par injection pour la fabrication de la pièce moulée par injection au moyen d'une commande du demi-moule (1), de sorte qu'un outil de moulage par injection de la machine de moulage par injection comprenant le demi-moule (1) est fermé, qu'une matière plastique est injectée dans la cavité (51) et que la pièce d'insertion disposée dans la position de moulage par injection est entourée par la matière plastique par injection en formant la pièce moulée par injection.
